## Europäisches Patentamt

## European Patent Office

## Office européen des brevets

(11) Veröffentlichungsnummer: **0 013 753**
**B1**

(12) # EUROPÄISCHE PATENTSCHRIFT

(45) Veröffentlichungstag der Patentschrift:
21.09.83

(21) Anmeldenummer: **79105330.9**

(22) Anmeldetag: **21.12.79**

(51) Int. Cl.³: **B 29 B 1/04,** C 08 J 3/20,
C 08 L 23/02, H 01 B 1/00

(54) **Verfahren zur Herstellung elektrisch leitender Polyolefinformkörper und deren Verwendung.**

(30) Priorität: **18.01.79 DE 2901758**

(43) Veröffentlichungstag der Anmeldung:
**06.08.80 Patentblatt 80/16**

(45) Bekanntmachung des Hinweises auf die Patenterteilung:
**21.09.83 Patentblatt 83/38**

(84) Benannte Vertragsstaaten:
**AT BE DE FR GB IT NL**

(56) Entgegenhaltungen:
**DE-B-1 283 506**
**FR-A-2 310 851**
**GB-A-1 447 304**
**US-A-4 045 403**

(73) Patentinhaber: **BASF Aktiengesellschaft,
Carl-Bosch-Strasse 38, D-6700 Ludwigshafen (DE)**

(72) Erfinder: **Theysohn, Rainer, Dr., Bruesseler Ring 38,
D-6700 Ludwigshafen (DE)**
Erfinder: **Boehlke, Klaus, Dr.,
Gerhart-Hauptmann-Strasse 53, D-6711 Hessheim (DE)**
Erfinder: **Seiler, Erhard, Dr., Erpolzheimer Strasse 1,
6700 Ludwigshafen (DE)**
Erfinder: **Welz, Martin, Kaiserslauterer Strasse 231,
D-6702 Bad Duerkheim 3 (DE)**

Verfahren zur Herstellung elektrisch leitender Polyolefinformkörper und deren Verwendung

Die Erfindung betrifft ein Verfahren zur Herstellung von elektrisch leitenden Polyolefinformkörpern, bestehend aus

a) 100 Gewichtsteilen eines kleinteiligen, teilkristallinen Polyolefins, das einen mittleren Teilchendurchmesser im Bereich von 10 bis 5000 μm hat und eine Grenzviskosität [η], gemessen in Decalin bei 135°C, im Bereich von 0,5 bis 15 aufweist,

b) 0,01 bis 30 Gewichtsteilen eines elektrisch leitenden Additivs, das einen maximalen Teilchendurchmesser von < 200 μm hat, einen mittleren Teilchendurchmesser aufweist, der kleiner als 1/25 des mittleren Teilchendurchmessers des Polyolefins (a) ist und dessen Schmelz- bzw. Erweichungstemperatur mindestens 50°C höher liegt als die Schmelztemperatur des Polyolefins (a),

c) – gegebenenfalls – 5 bis 100 Gewichtsteilen eines faserförmigen Additivs, das einen Faserdurchmesser von < 50 μm hat, ein maximales Längen- zu Dickenverhältnis von 1000 : 1 aufweist und dessen Schmelztemperatur höher liegt als die Schmelztemperatur des Polyolefins (a), und

d) – gegebenenfalls – üblichen Mengen üblicher anderer Zusatz- und Hilfsstoffe.

Derartige elektrisch leitende Formkörper können entweder direkt in Form von Platten oder Tafeln eingesetzt werden, eine weitere Formgebung, z. B. durch Tiefziehen oder Formpressen, ist aber auch möglich. Die Formkörper zeichnen sich durch eine gute elektrische Leitfähigkeit aus und sind auch als elektrische Wärmeträger geeignet.

Zur Leitung des elektrischen Stromes werden in der Regel Metalle verwendet. Es gibt aber auch Fälle, wo es aus Kostengründen, aus Gründen der besseren Formbarkeit oder wegen der Gefahr von Korrosion oder eines chemischen Angriffs sinnvoll ist, Kunststoffe mit elektrischer Leitfähigkeit zu verwenden. Dies lässt sich einmal erreichen durch die Wahl ganz spezieller Monomerbausteine, die dann polymerisiert werden. Dieser Weg ist sehr kostspielig. Die Entwicklung auf diesem Gebiet ist bei weitem noch nicht abgeschlossen, so dass solche Produkte kommerziell noch nicht verfügbar sind.

Andererseits kann man durch homogenes Einarbeiten von an sich leitfähigen Additiven in nicht leitfähige Kunststoffe elektrische Leitfähigkeit im Kompound erreichen. Je höher der Gehalt an leitfähigen Additiven ist, umso besser wird die elektrische Leitfähigkeit entsprechend gefüllter Formmassen; je nach Anforderungen beträgt hierbei der Gehalt an leitfähigen Additiven 20–95 Gewichtsprozent. Bei der Herstellung solcher Formmassen schmilzt man zunächst auf üblichen Extrudern, Innenmischern oder Schneckenknetern das Polymere auf und arbeitet gleichzeitig das leitfähige Additiv möglichst homogen ein. Nachteile dieses Verfahrens sind der relativ hohe Energieaufwand, der zum Aufschmelzen des Polyolefins und zum Schmelzmischen mit dem leitfähigen Additiv notwendig ist und der erhebliche technische und finanzielle Aufwand, der bei der exakten Dosierung der nicht unbeträchtlichen Mengen oftmals zum Stauben und Blocken neigenden leitfähigen Additive getrieben werden muss. Die so hergestellten elektrisch leitenden Formmassen zeichnen sich allerdings aufgrund ihres hohen Füllungsgrades durch eine deutlich erschwerte Verarbeitbarkeit aus. Nicht geeignet ist dieses Verfahren bei Polymeren, die wegen ihres hohen Molekulargewichts oder wegen partieller Vernetzung durch die bei der Einarbeitung des leitfähigen Additivs zwangsläufig auftretenden Scherkräfte irreversibel geschädigt werden.

Aus der US-A-4045403 ist es bereits bekannt, eine kleinteilige Ausgangsmischung aus einem Polyolefin und Füllstoffpulver in einem Mischer durch Mischen bis über die Kristallitschmelztemperatur des verwendeten Polyolefins unter Aufnahme und Verteilung des Füllstoffs an der Polyolefinoberfläche zu erhitzen und anschliessend abzukühlen. Der Mischvorgang kann dabei zwischenzeitlich abgestoppt und solange ausgesetzt werden, bis die mit Füllstoff besetzte Polyolefinoberfläche erstarrt ist; anschliessend wird erneut gemischt bis über die Kristallitschmelztemperatur des Polyolefins, der Mischvorgang ausgesetzt, abgekühlt erneut gemischt usw. Bei diesen bekannten Verfahren wird laufend mit Füllstoff beladenes Polymermaterial von der Oberfläche des Polymerteilchens abgeschmolzen, wobei kontinuierlich neue Teilchen entstehen, bei denen der Füllstoff homogen verteilt in der Polyolefinmatrix vorliegt. Nach dem Stand der Technik wird von kleinen Partikeln ausgegangen und ein Endprodukt erhalten, das in der Regel eine andere Korngrösse aufweist. Das bekannte Verfahren weist den Nachteil auf, dass bei Verwendung elektrisch leitfähiger Füllstoffpartikel nach Verarbeitung ein Halbzeug erhalten würde, in dem das elektrisch leitfähige Additiv homogen in der Masse verteilt ist. Die elektrische Leitfähigkeit derartiger Halbzeuge ist aber nur sehr gering. Ausserdem werden gemäss der US-Patentschrift relativ hohe Mengen an Additiv verbraucht und eingemischt, was eine negative Beeinflussung der mechanischen Eigenschaften des Halbzeugs zur Folge hat.

Aufgabe war es daher, ein einfaches und kostengünstiges Verfahren zur Herstellung von elektrisch leitendem Halbzeug mit guten mechanischen Eigenschaften zu entwickeln, das die aufgezeigten Nachteile des Standes der Technik vermeidet.

Die Aufgabe wurde erfindungsgemäss dadurch gelöst, dass man zunächst in einem ersten Verfahrensschritt (A) eine kleinteilige Formmasse, bestehend aus den Komponenten (a), (b), gegebenenfalls (c) und/oder (d) erzeugt, wobei in einer ersten Arbeitsstufe (I) in einem Mischer – gegebenenfalls unter Zu- und Abfuhr von Wärme – die Komponenten (a), (b), gegebenenfalls (c) und/oder (d) gemischt werden, wobei das Gemisch in einer ersten Unterstufe (I.1) bei einer Mischintensität im Bereich von 100 bis 500 W/l Nutzinhalt innerhalb

einer Zeitspanne von 2 bis 50 Minuten von Umgebungstemperatur – die unterhalb der Kristallitschmelztemperatur des Polyolefins (a) liegt und insbesondere Raumtemperatur ist – auf die Kristallitschmelztemperatur des Polyolefins (a) gebracht wird, unmittelbar darauf im Verlauf einer zweiten Unterstufe (I.2) auf eine Mischintensität übergeht, die 0,3 bis 0,8 mal so gross ist wie die Mischintensität in der ersten Unterstufe (I.1), und innerhalb einer Zeitspanne von 0,2 bis 20 Minuten von der Kristallitschmelztemperatur des Polyolefins (a) auf eine 3 bis 40°C darüber liegende Temperatur bringt; unmittelbar hiernach – gegebenenfalls – in einer dritten Unterstufe (I.3) auf eine Mischintensität übergeht, die 0,5 bis 1,0 mal so gross ist wie die Mischintensität in der zweiten Unterstufe (I.2), und für eine Zeitspanne von 0,2 bis 10 Minuten auf der in Unterstufe (I.2) erreichten Temperatur hält; und unmittelbar anschliessend in einer zweiten Arbeitsstufe (II) innerhalb einer Zeitspanne von 0,5 bis 30 Sekunden aus dem Mischer austrägt und entweder innerhalb von 120 Sekunden auf eine Temperatur unterhalb der Kristallitschmelztemperatur des Polyolefins (a) bringt oder direkt in einem zweiten Verfahrensschritt (B) weiterverarbeitet, wobei man in diesem zweiten Verfahrensschritt (B) die im ersten Verfahrensschritt (A) erhaltene kleinteilige Formmasse bei Temperaturen oberhalb des Kristallitschmelzpunkts des Polyolefins (a) im kontinuierlichen oder diskontinuierlichen Pressverfahren bei möglichst geringer Scherung zu elektrisch leitenden Formkörpern mit einer spezifischen Leitfähigkeit $> 10^{-6} \text{Ohm}^{-1}\text{cm}^{-1}$, vorzugsweise $> 10^{-3}\text{Ohm}^{-1}\text{cm}^{-1}$ formt.

Unter kleinteiligen, teilkristallinen Polyolefinen (a) werden solche verstanden, die einen Teilchendurchmesser im Bereich von 10 bis 5000, vorzugsweise 100 bis 2000 µm aufweisen und deren Grenzviskosität (gemessen nach DIN 53728 in Decalin bei 135°C) im Bereich von 0,5 bis 15, vorzugsweise 1 bis 10 liegt. Bei den Polyolefinen handelt es sich vorzugsweise um Polyäthylen hoher Dichte (0,93 bis 0,97 g/cm³) und um Propylen, insbesondere um ein solches, das nach Gasphasenverfahren, wie z.B. in der DE-B-1217071 beschrieben, hergestellt wurde, Copolymere von Äthylen und Propylen sofern sie noch kristalline Anteile enthalten, sowie um entsprechende Polymere, die bis zu 5 Gewichtsprozent Acrylsäure aufgepfropft enthalten.

Unter teilkristallinen Polyolefinen seien solche verstanden, die bei der DSC-Analyse zumindest einen Schmelzpeak aufweisen.

Unter elektrisch leitenden Additiven (b) werden solche feinteiligen Produkte verstanden, die in kompakter Form hohe elektrische Leitfähigkeiten aufweisen. In Frage kommen z.B. Pulver von Metallen und Metallegierungen mit einem maximalen Teilchendurchmesser von $< 200$ µm, vorzugsweise 0,001 bis 50 µm und insbesondere 0,01 bis 10 µm; ausserdem elementarer Kohlenstoff und Russe, vor allem Leitfähigkeitsrusse mit einer Primärpartikelgrösse bis herab zu 10 nm; weiterhin Graphit mit einem maximalen Teilchendurchmes-

ser $< 200$ µm, vorzugsweise $< 50$ µm. Der jeweilige Teilchendurchmesser des leitfähigen feinteiligen Additivs soll kleiner als $\frac{1}{25}$, vorzugsweise kleiner als $\frac{1}{50}$ des mittleren Teilchendurchmessers des Polyolefins (a) sein und der Schmelzpunkt des leitfähigen Additivs soll um mindestens 50°C höher liegen als der Kristallitschmelzpunkt des Olefinpolymerisats (a). Es besteht auch die Möglichkeit Gemische unterschiedlicher elektrisch leitender Additive einzusetzen. Es werden 0,01 bis 30, vorzugsweise 0,1 bis 20, insbesondere 0,5 bis 10 Gewichtsteile des Additivs (b) verwendet.

Als faserförmige Additive (c) kommen in Frage: Glasfasern, Mineralfasern, Asbestfasern, sowie Cellulose, Polyamid- und Polyesterfasern. Der Faserdurchmesser soll hierbei $< 50$ µm, vorzugsweise $< 20$ µm sein, das maximale Längen- zu Dickenverhältnis nicht grösser als 1000:1 sein. Zudem soll die Schmelz- bzw. Erweichungstemperatur des faserförmigen Additivs höher liegen als die des Polyolefins (a). Es werden 5 bis 100, vorzugsweise 10 bis 60 Gewichtsteile der Komponente (c) verwendet.

Als Hilfs- und Zusatzstoffe (d) seien genannt: Anorganische und organische Farbpigmente, Stabilisatoren, Verarbeitungshilfsmittel wie Fliess-, Gleit- und Entformungsmittel, Füllstoffe, Haft- und Verträglichkeitsvermittler, Netzmittel und Treibstoff.

Die Herstellung der kleinteiligen Formmassen, bestehend aus (a), (b), gegebenenfalls (c) und/ oder (d) gemäss Verfahrensschritt (A) kann erfolgen in einem Mischer, in dem die Mischflügel senkrecht zur Mischachse angeordnet sind und wie es z.B. in der DE-B-1054073 oder DE-B-1454768 beschrieben ist.

Zur Herstellung der erfindungsgemässen elektrisch leitenden Formkörper in Verfahrensschritt (B) werden die im Verfahrensschritt (A) erhaltenen kleinteiligen Formmassen bei Temperaturen von 5 bis 150, vorzugsweise 10 bis 50°C oberhalb des Schmelzpunktes des Polyolefins (a) und Drücken von 10 bis 800, vorzugsweise 200 bis 500 bar im kontinuierlichen oder diskontinuierlichen Pressverfahren ohne Anwendung von Scherung zu kompaktem Halbzeug geformt. Verwendbar hierfür sind heizbare Pressen jeder Art, in die auch eine gewünschte Form eingelegt werden kann. Nach dem Füllen der Form mit der kleinteiligen Formmasse (aus Verfahrensschritt A) und dem Aufheizen auf die gewünschte Presstemperatur wird die Presse geschlossen und der gewählte Pressdruck über eine Zeitspanne von 2 bis 200, vorzugsweise 5 bis 100 Sekunden aufrecht erhalten. Danach wird – vorzugsweise bei gleichbleibendem Pressdruck – abgekühlt. Das Pressverfahren ist dadurch gekennzeichnet, dass einem hohen Pressdruck eine kurze Presszeit und einem geringen Pressdruck eine längere Presszeit zugeordnet ist. Neben dem diskontinuierlichen Pressen ist auch ein kontinuierliches Verfahren z.B. auf einer Doppelbandpresse möglich. In allen Fällen ist das gleichzeitige Ein- oder Aufpressen von Stromführungen z.B. in Form eines Metallnetzes möglich. Eine weitere Variante besteht darin, beim Pressvorgang verstärkende oder dekorative Gewebe oder Vliese aufzubringen.

Die Mischintensität in W/l Nutzinhalt bei der erfindungsgemässen Arbeitsweise gemäss Verfahrensschritt (A) ist definiert als die Energieaufnahme in Watt bezogen auf 1 Liter des Volumens, die die Komponenten (a), (b) und gegebenenfalls (c) und/oder (d) im Mischer einnehmen.

Überraschend wurde nun gefunden, dass es nach dem erfindungsgemässen zweistufigen Verfahren möglich ist, bereits mit geringen Mengen an elektrisch leitendem Additiv (b) ein Halbzeug zu erhalten, das sich durch eine gute elektrische Leitfähigkeit auszeichnet. Weiterhin war es überraschend, dass die mechanischen Eigenschaften des Halbzeugs wie Zug- und Biegefestigkeit vergleichsweise sehr günstig liegen. Voraussetzung hierfür ist, dass im ersten Verfahrensschritt (A) infolge der speziellen Arbeitsweise zunächst eine feinteilige Formmasse erzeugt wird, die das leitfähige Additiv (b) vollständig gebunden enthält und dass dann im zweiten Verfahrensschritt (B) diese feinteilige Formmasse – gegebenenfalls in Form von Siebfraktionen – einer Verarbeitung zu Halbzeug zugeführt wird, wobei die Temperaturen oberhalb des Kristallitschmelzpunktes des Polyolefins (a) liegen und hohe Drücke bei weitgehender Vermeidung von Scherung angewendet werden.

Das beschriebene Verfahren ist in bezug auf den ersten Verfahrensschritt apparativ und energetisch weit weniger aufwendig als z.B. Einkonfektionierung des elektrisch leitenden kleinteiligen Additivs (b) in das Polyolefin (a) auf Extrudern. Zudem ist die für eine bestimmte elektrische Leitfähigkeit benötigte Menge Additiv (b) in Kombination mit Verfahrensstufe 2 erheblich geringer als bei konventioneller Verfahrensweise. Weiterhin hat das Verfahren den Vorteil, dass auch solche Polyolefine (a) verwendet werden können, die wegen partieller Vernetzung oder ultrahohen Molekulargewichts nicht oder nur unter Schädigung auf konventionellem Wege verarbeitet werden können.

Das elektrisch leitende Halbzeug kann allgemein zur Leitung des elektrischen Stromes eingesetzt werden, wo z.B. aus Kostengründen oder aus Gründen der Korrosionsgefahr metallische Leiter nicht eingesetzt werden können. Eine Spezialanwendung sind u.a. Elektroden und Elektrolyseplatten. Eine andere Anwendung besteht darin, dass das stromdurchflossene elektrisch leitende Halbzeug zur Umwandlung von elektrischer Energie in Wärmeenergie verwendet werden kann, z.B. in Form von Heizflächenelementen.

Das elektrisch leitende Halbzeug kann zudem einer nachträglichen Formgebung z.B. durch Tiefziehen unterworfen werden, wobei auftretende Scherkräfte möglichst klein gehalten werden sollten.

Die folgenden Beispiele verdeutlichen das oben genannte Verfahren:

Beispiel 1

A) Ausgangsmaterial für die erste Verfahrensstufe (A) ist ein Gemisch aus

a) 25 kg (entsprechend 100 Gew.-Teilen) eines kleinteiligen Polyäthylens, das einen Teilchendurchmesser im Bereich von 250–2000 μm und einen mittleren Teilchendurchmesser von 800 μm hat und eine Grenzviskosität [η] von 4,8 aufweist und

b) 1,6 kg (entsprechend 4,6 Gew.-Teilen) Leitfähigkeitsruss vom Typ KETJEN-BLACK EC 10 (der Fa. AKZO, Niederlande).

Das vorgenannte Gemisch wird

(1) in einer ersten Arbeitsstufe in einem Mischer von 100 l Nutzinhalt, wie er in DE-B-1454768 beschrieben ist – ohne Zu- oder Abfuhr von Wärme –,

(1.1) in einer ersten Unterstufe bei einer Mischintensität von 230 W/l Nutzinhalt innerhalb einer Zeitspanne von 10,5 min von Umgebungstemperatur (= Raumtemperatur) auf die Kristallitschmelztemperatur des Polyäthylens (a) (= ~ 138°C) gebracht; unmittelbar darauf

(1.2) im Verlauf einer weiteren Unterstufe bei einer Mischintensität, die im Mittel 0,35 mal so gross ist wie die Mischintensität in der ersten Unterstufe (1.1), innerhalb einer Zeitspanne von 4 Minuten von der Kristallitschmelztemperatur des Polyäthylens (a) auf eine 32°C darüberliegende Temperatur (= 170°C) gebracht; und unmittelbar hiernach

(2) in einer zweiten Arbeitsstufe innerhalb einer Zeitspanne von 5 s aus dem Mischer ausgetragen und innerhalb von 35 s auf eine Temperatur (= 80°C) unterhalb der Kristallitschmelztemperatur des Polyäthylens (a) gebracht.

Das erhaltene Produkt hat eine mit dem eingesetzten kleinteiligen Polyäthylen (a) vergleichbare Kornverteilung, ist frei fliessend und enthält den eingesetzten Leitfähigkeitsruss (b) vollständig und abriebfest gebunden.

B) Aus dem in (A) erhaltenen feinteiligen Produkt wurden auf einer dampfbeheizten Presse vom Typ JWK der Fa. Kanzler u. Söhne, Neustadt (Weinstrasse), Platten mit den Abmessungen 150 × 70 × 4 mm hergestellt. Hierbei wurde bei geöffneter Presse das locker geschüttete Material zunächst auf 175°C aufgeheizt. Sobald die Temperatur erreicht war, wurde der Pressvorgang eingeleitet, wobei für einen Zeitraum von 10 Sekunden 350 bar angewendet wurden. Danach wurde bei gleichbleibendem Druck auf Raumtemperatur abgekühlt.

An diesen Platten wurde die spezifische Leitfähigkeit nach DIN 53482 zwischen den 150 mm auseinanderliegenden Plattenendflächen bestimmt. Weiterhin wurden aus den Platten Prüfkörper herausgearbeitet, an denen die Zug- und Biegefestigkeit nach DIN 53455 gemessen wurden. Die Ergebnisse sind in Tabelle 1 zusammengestellt.

Beispiel 2 (Vergleichsbeispiel)

Zum Vergleich wurden aus den in Beispiel 1 (A) genannten Komponenten (a) und (b), in einem Fluidmischer bei Raumtemperatur eine mechanisch homogene feinteilige Mischung hergestellt.

Bei der Weiterverarbeitung gemäss 1 (B) war es nicht möglich, eine mechanisch stabile Platte zu erzeugen. Dies gelang auch nicht bei erhöhter Temperatur (200°C), erhöhtem Druck (500 bar) und längerer Presszeit (bis 50 Sekunden).

Beispiel 3 (Vergleichsbeispiel)

Die im Beispiel 2 angefallene homogene mechanische Mischung wurde in einen 2-Schneckenkneter vom Typ ZSK der Fa. Werner & Pfleiderer gegeben, dort bei Temperaturen von 270°C aufgeschmolzen, gemischt, als Strang ausgetragen, gekühlt und granuliert.

Aus den erhaltenen Granulaten, in denen der Leitfähigkeitsruss weitgehend homogen im Polyäthylen (a) verteilt vorliegt, wurden wie in Beispiel 1 B beschrieben, Platten in den Abmessungen 150 × 70 × 4 mm hergestellt und geprüft. Ergebnisse in Tab. 1.

Tabelle 1

| Pressplatte aus Beispiel | spez. el. Leitfähigkeit $[Ohm^{-1}.cm^{-1}]$ | Zugfestigkeit $[Nmm^{-2}]$ | Biegefestigkeit $[Nmm^{-2}]$ |
|---|---|---|---|
| 1 | 0,12 | 23,5 | 36,8 |
| 3 | $0,18.10^{-11}$ | 17,4 | 34,6 |

Beispiel 4

A) Ausgangsmaterial für die erste Verfahrensstufe (A) ist ein Gemisch aus

a) 25 kg (entsprechend 100 Gew.-Teilen) eines kleinteiligen Polyäthylens, das einen Teilchendurchmesser im Bereich von 250–2000 µm und einen mittleren Teilchendurchmesser von 800 µm hat und eine Grenzviskosität $[\eta]$ von 4,8 aufweist und

b) 0,51 kg (entsprechend 2,04 Gew.-Teilen) Graphit UF 2-99,5/99,9 der Fa. Graphit-Werk Kropfmühl AG, 8000 München 33, der einen maximalen Teilchendurchmesser von 5 µm hat, und einen mittleren Teilchendurchmesser (= 1,2 µm) aufweist, der $\frac{1}{666}$ mal so gross ist wie der mittlere Teilchendurchmesser des Polyäthylens (a).

Das vorgenannte Gemisch wird

(1) in einer ersten Arbeitsstufe in einem Mischer wie in Beispiel 1 A von 100 l Nutzinhalt – ohne Zu- oder Abfuhr von Wärme –,

(1.1) in einer ersten Unterstufe bei einer Mischintensität von 196 W/l Nutzinhalt innerhalb einer Zeitspanne von 7,5 min von Umgebungstemperatur (= Raumtemperatur) auf die Kristallitschmelztemperatur des Polyäthylens (a) (= ~ 138°C) gebracht; unmittelbar darauf

(1.2) im Verlauf einer weiteren Unterstufe bei einer Mischintensität, die im Mittel 0,68 mal so gross ist wie die Mischintensität in der ersten Unterstufe (1.1), innerhalb einer Zeitspanne von 2,1 min von der Kristallitschmelztemperatur des Polyäthylens (a) auf eine 12°C darüberliegende Temperatur (= 150°C) gebracht; und unmittelbar hiernach

(2) in einer zweiten Arbeitsstufe innerhalb einer Zeitspanne von 5 s aus dem Mischer ausgetragen und innerhalb von 30 sec auf eine Temperatur (= 82°C) unterhalb der Kristallitschmelztemperatur des Polyäthylens (a) gebracht.

Das erhaltene Produkt hat eine mit dem eingesetzten kleinteiligen Polyäthylen (a) vergleichbare Kornverteilung, ist frei fliessend und enthält den eingesetzten Graphit vollständig und fest gebunden.

B) Das erhaltene Produkt wurde unter den Bedingungen, wie sie in Beispiel 1 (B) angegeben sind, zu Platten mit den Abmessungen 150 × 70 × 4 mm verarbeitet und entsprechend geprüft. Ergebnisse in Tab. 2.

Beispiel 5

A) Ausgangsmaterial für die erste Verfahrensstufe (A) ist ein Gemisch aus

a) 20 kg (entsprechend 100 Gew.-Teilen) eines kleinteiligen acrylsäuregepfropften Polypropylens mit einer Säurezahl von 29, das einen Teilchendurchmesser im Bereich von 25–1500 µm und einen mittleren Teilchendurchmesser von 500 µm hat, und eine Grenzviskosität $[\eta]$ von < 4 (MFI = 0,1, 2,16 kg/230°C) aufweist und

b) 1 kg (entsprechend 5 Gew.-Teilen) Leitfähigkeitsruss KETJEN-BLACK EC 10 (der Fa. AKZO, Niederlande).

c) 2 kg (entsprechend 10 Gew.-Teilen) Glasfasern aus E-Glas, die mit einem Haftvermittler auf Silanbasis ausgerüstet sind und die einen Faserdurchmesser von 10 µm haben und eine mittlere Länge von 0,20 mm im Anlieferungszustand aufweisen und

d) 0,04 kg (entsprechend 0,2 Gew.-Teilen) Irganox 1010 (der Fa. Ciby-Geigy, Basel) (als einschlägig üblicher Zusatz- bzw. Hilfsstoff, nämlich Stabilisator).

Das vorgenannte Gemisch wird

(1) in einer ersten Arbeitsstufe in einem Mischer wie in Beispiel 1 A von 100 l Nutzinhalt – ohne Zu- oder Abfuhr kalorischer Wärme –,

(1.1) in einer ersten Unterstufe bei einer Mischintensität von 282 W/l Nutzinhalt innerhalb einer Zeitspanne von 11 min von Umgebungstemperatur (= Raumtemperatur) auf die Kristallitschmelztemperatur des modifizierten Polypropylens (a) (= ~ 160°C) gebracht; unmittelbar darauf

(1.2) im Verlauf einer zweiten Unterstufe bei einer Mischintensität, die im Mittel 0,60 mal so gross ist wie die Mischintensität der ersten Unterstufe (1.1), innerhalb einer Zeitspanne von 5,1 Minuten von der Kristallitschmelztemperatur des acrylsäuregepfropften Polypropylens (a) auf eine 14°C darüberliegende Temperatur (= 174°C) gebracht; und unmittelbar hiernach

(2) in einer zweiten Arbeitsstufe innerhalb einer Zeitspanne von 5 s aus dem Mischer ausgetragen und innerhalb von 8 s auf eine Temperatur (= 80°C) unterhalb der Kristallitschmelztemperatur des gepfropften Polypropylens (a) gebracht.

Das erhaltene feinteilige Produkt hat eine Kornverteilung, die etwas kleiner ist als die des eingesetzten chemisch modifizierten Polypropylens. Es enthält den eingesetzten Leitfähigkeitsruss (b) vollständig, die eingesetzten Glasfasern (c) zu mindestens 90% fest gebunden, die mittlere Glasfaserlänge liegt bei 0,16 mm.

B) Mit dem erhaltenen Produkt wurde wie in Beispiel 1 B verfahren, mit folgenden Unterschieden: Arbeitstemperatur 200°C, max. Pressdruck 360 bar, Presszeit bei 200°C: 20 Sekunden. An den erhaltenen Platten in den Abmessungen 150 × 70 × 4 mm wurde die spezifische Leitfähigkeit, sowie Zug- und Biegefestigkeit gemäss Beispiel 1 B geprüft. Ergebnisse in Tab. 2.

Tabelle 2

| Pressplatte gemäss Beispiel | spez. el. Leit- fähigkeit [Ohm$^{-1}$.cm$^{-1}$] | Zugfestig- keit [Nmm$^{-2}$] | Biege- festigkeit [Nmm$^{-2}$] |
|---|---|---|---|
| 4 | $1,7.10^{-2}$ | 24,2 | 35,0 |
| 5 | 0,16 | 32,8 | 45,1 |

Wie aus der Tabelle ersichtlich, zeigt das erfindungsgemässe Halbzeug sowohl gute Festigkeitseigenschaften als auch eine vergleichsweise hohe spezifische elektrische Leitfähigkeit (geringer spez. Durchgangswiderstand) bereits bei geringen Mengen an leitfähigem Additiv.

**Patentansprüche**

1. Verfahren zur Herstellung elektrisch leitender Polyolefinformkörper, bestehend aus:
a) 100 Gew.-Teilen eines kleinteiligen, teilkristallinen Polyolefins, das einen Teilchendurchmesser im Bereich von 10–5000 µm hat und eine Grenzviskosität [η], gemessen in Decalin bei 135°C, im Bereich von 0,5–15 aufweist,
b) 0,01–30 Gew.-Teilen eines elektrisch leitenden Additivs, das einen maximalen Teilchendurchmesser von < 200 µm hat, einen mittleren Teilchendurchmesser aufweist, der kleiner als ¹⁄₂₅ des mittleren Teilchendurchmessers des Polyolefins (a) ist, und dessen Schmelz- bzw. Erweichungstemperatur mindestens 50°C höher liegt als die Schmelztemperatur des Olefinpolymerisats (a),
c) – gegebenenfalls – 5–10 Gew.-Teilen eines faserförmigen Additivs, das einen Faserdurchmesser von < 50 µm hat, ein maximales Längen- zu Dickenverhältnis von 1000 : 1 aufweist und dessen Schmelztemperatur höher liegt als die Schmelztemperatur des Olefinpolymerisates (a) sowie
d) – gegebenenfalls – üblichen Mengen üblicher anderer Zusatz- bzw. Hilfsstoffe,
dadurch gekennzeichnet, dass man in einem ersten Verfahrensschritt (A) zunächst eine kleinteilige Formmasse bestehend aus (a), (b), gegebenenfalls (c) und/oder (d) erzeugt, wobei in einer ersten Arbeitsstufe (I) in einem Mischer – gegebenenfalls unter Zu- oder Abfuhr von Wärme –, die Komponenten (a), (b), gegebenenfalls (c) und/oder (d) gemischt werden, wobei das Gemisch in einer ersten Unterstufe (I.1) bei einer Mischintensität im Bereich von 100 bis 500 W/l Nutzinhalt innerhalb einer Zeitspanne von 2 bis 50 Minuten von Umgebungstemperatur – die unterhalb der Kristallitschmelztemperatur des Polyolefins (a) liegt und insbesondere Raumtemperatur ist – auf die Kristallitschmelztemperatur des Polyolefins (a) gebracht wird; unmittelbar darauf im Verlauf einer zweiten Unterstufe (I.2) auf eine Mischintensität übergeht, die 0,3 bis 0,8 mal so gross ist wie die Mischintensität in der ersten Unterstufe (I.1), und innerhalb einer Zeitspanne von 0,2 bis 20 Minuten von der Kristallitschmelztemperatur des Polyolefins (a) auf eine 3 bis 40°C darüber liegende Temperatur bringt; unmittelbar hiernach – gegebenenfalls – in einer dritten Unterstufe (I.3) auf eine Mischintensität übergeht, die 0,5 bis 1,0 mal so gross ist wie die Mischintensität in der zweiten Unterstufe (I.2), und für eine Zeitspanne von 0,2 bis 10 Minuten auf der in Unterstufe (I.2) erreichten Temperatur hält; und unmittelbar anschliessend in einer zweiten Arbeitsstufe (II) innerhalb einer Zeitspanne von 0,5 bis 30 Sekunden aus dem Mischer austrägt und entweder innerhalb von 120 Sekunden auf eine Temperatur unterhalb der Kristallitschmelztemperatur des Polyolefins (a) bringt oder direkt in einem zweiten Verfahrensschritt (B) weiterverarbeitet, wobei man in diesem zweiten Verfahrensschritt (B) die im ersten Verfahrensschritt (A) erhaltene kleinteilige Formmasse bei Temperaturen oberhalb des Kristallitschmelzpunktes des Polyolefins (a) im kontinuierlichen oder diskontinuierlichen Pressverfahren bei möglichst geringer Scherung zu elektrisch leitenden Formkörpern mit einer spezifischen Leitfähigkeit > 10$^{-6}$ Ω$^{-1}$.cm$^{-1}$ formt.

2. Verwendung derart hergestellter elektrisch leitender Polyolefinformkörper als Stromträger oder als Heizflächenelemente.

**Claims**

1. A process for the manufacture of electrically conductive polyolefin moldings, which comprise
(a) 100 parts by weight of a finely divided, partially crystalline polyolefin, which has a mean particle diameter of from 10 to 5,000 µm and an intrinsic viscosity [η], measured in decahydronaphthalene at 135°C, of from 0.5 to 15 and
b) from 0.01 to 30 parts by weight of an electrically conductive additive which has a maximum particle diameter of < 200 µm and a mean particle diameter which is less than ¹⁄₂₅ of the mean particle diameter of the polyolefin (a), and has a melting point or softening point which is at least 50°C higher than the melting point of the polyolefin (a), with or without
(c) from 5 to 10 parts by weight of a fibrous additive which has a fiber diameter of < µm and a maximum length-to-width ratio of 1,000:1, and has a melting point above that of the polyolefin (a), and with or without (d) conventional amounts of other conventional additives and auxiliaries,
wherein, in a first process step (A) a finely divided molding material comprising the components (a) and (b), with or without (c) and/or (d), is produced by mixing the components (a) and (b), with or without (c) and/or (d), in a first stage (I), in a mixer (with or without the supply or removal of heat), during which first stage (I), in a first sub-stage (I.1), the mixture is brought, at a mixing intensity of from 100 to 500 W/l of useful capacity, and within a period of from 2 to 50 minutes, from ambient temperature, which is below the crystallite melting point of the polyolefine (a) and is, in particular, room temperature, to the crystallite melting point of the polyolefin (a), and is immediately thereafter, in the course of a second sub-stage (I.2), subjected to a mixing intensity which is from 0.3 to 0.8 times as great as the mixing intensity in the first sub-stage (I.1) and is brought, within a period of from 0.2 to 20 minutes, from the crystallite melting point of the polyolefin (a) to a temperature which is from 3 to 40°C above this, and, if appropriate, is immediately thereafter, in a third sub-stage (I.3), subjected to a mixing intensity which is from 0.5 to 1.0 times as great as the mixing intensity in the second substage (I.2) and is kept for a period of from 0.2 to 10 minutes at the temperature reached in sub-stage (I.2) and immediately thereafter, in a second stage (II), is discharged from the mixer within a period of from 0.5 to 30 seconds and is either brought, within 120 seconds, to a temperature below the crystallite melting point of the polyolefin (a), or is directly processed further in a second process step (B), in which the finely divided molding material obtained from the first process step (A) is molded at a temperature above the crystallite melting point of the polyolefin (a), by a continuous or discontinuous compression-molding process, under minimal shear, to give electrically conductive moldings having a specific conductivity of $> 10^{-6}$ $\Omega^{-1}$ cm$^{-1}$ preferably of $> 10^{-3}$ $\Omega^{-1}$ cm$^{-1}$.

2. Use of the so-produced electrically conductive polyolefin moldings as conductors or as heating elements.


**Revendications**

1. Procédé pour la fabrication de pièces moulées polyoléfines électriquement conductrices, se composant de:
a) 100 parties en poids d'une polyoléfine partiellement cristallisée en petites particules qui a un diamètre de particules dans la gamme de 10 à 5000 microns et présente une viscosité limite [η], mesurée dans la décaline à 135°C, dans la gamme de 0,5 à 15,
b) 0,01 à 30 parties en poids d'un additif électriquement conducteur qui a un diamètre maximal de particules de moins de 200 microns, présente un diamètre moyen de particules qui est inférieur à ¹⁄₂₅ du diamètre moyen des particules de la polyoléfine (a) et dont la température de fusion ou de ramollissement se situe au moins à 50°C au-dessus de la température de fusion du polymère oléfinique (a),
c) – le cas échéant – 5 à 10 parties en poids d'un additif fibreux qui a un diamètre des fibres de moins de 50 microns, présente un rapport maximal de la longueur à l'épaisseur de 1000:1 et dont la température de fusion est plus élevée que la température de fusion du polymère oléfinique (a), et (d) – le cas échéant – les quantités habituelles d'autres matières de charge et adjuvants usuels, charactérisé en ce que tout d'abord, dans un premier temps opératoire (A), on produit une matière à mouler en petites particules, se composant des constituants (a), (b) et, le cas échéant, (c) et/ou (d), en mélangeant, en une première phase (I) de ce temps opératoire, les constituants (a), (b) et, le cas échéant, (c) et/ou (d) dans un mélangeur – éventuellement avec apport ou évacuation de chaleur –, le mélange étant porté, dans une première sous-phase (I.1), en un laps de temps de 2 à 50 minutes, de la température environnante – qui se situe au-dessous de la température de fusion des cristallites de la polyoléfine (a) et qui est en particulier la température de la pièce – à la température de fusion des cristallites de la polyoléfine, avec une intensité de malaxage dans la gamme de 100 à 500 W/l de capacité utile du mélangeur; cette première sous-phase étant immédiatement suivie d'une seconde sous-phase (I.2) au cours de laquelle on passe à une intensité de malaxage qui est de 0,3 à 0,8 l'intensité de malaxage appliquée dans la première sous-phase (I.1) et, en un laps de temps de 0,2 à 20 minutes, on porte le mélange de la température de fusion des cristallites de la polyoléfine (a) à une température se situant entre 3 et 40°C au-dessus; cette seconde sous-phase étant-éventuellement – suivie immédiatement d'une troisième sous-phase (I.3) dans laquelle on passe à une intensité de malaxage qui est de 0,5 à 1,0 fois l'intensité de malaxage appliquée dans la seconde sous-phase (0.2) et on maintient la température atteinte dans la sous-phase (I.2) pendant un laps de temps de 0,2 à 10 minutes; et immédiatement après, en une seconde phase (II), en extrayant du mélangeur le contenu de celui-ci en un laps de temps de 0,5 à 30 secondes et soit en le portant, en l'espace de 120 secondes, à une température inférieure à la température de fusion des cristallites de la polyoléfine (a), soit, dans un second temps opératoire (B), en le soumettant directement à une transformation ultérieure, auquel cas, dans ce second temps opératoire (B), on transforme la matière à mouler finement divisée, obtenue dans le premier temps opératoire (A), à une température supérieure au point de fusion des cristallites de la polyoléfine (a), par un procédé de moulage à la presse continu ou discontinu, avec des efforts de cisaillement aussi faibles que possible, en pièces moulées électriquement conductrices, ayant une conductivité spécifique supérieure à $10^{-6}$ ohms$^{-1}$.cm$^{-1}$ et, de préférence, supérieure à $10^{-3}$ ohms$^{-1}$.cm$^{-1}$.

2. Utilisation de pièces moulées de polyoléfines électriquement conductrices, fabriquées de cette manière, comme éléments transporteurs de courant ou comme éléments chauffants en forme de panneaux.